(19) **Europäisches Patentamt**

**European Patent Office**

**Office Européen des brevets**

(11) Veröffentlichungsnummer: **0 264 669 B1**

(12) **EUROPÄISCHE PATENTSCHRIFT**

(45) Veröffentlichungstag der Patentschrift:
02.01.91 Patentblatt 91/01

(51) Int. Cl.⁵: **B01D 53/08**, B01D 46/34,
B01J 8/12

(21) Anmeldenummer: **87114181.8**

(22) Anmeldetag: **29.09.87**

(54) Vorrichtung zur Aufnahme von rieselfähigem Schüttgut.

(30) Priorität: **20.10.86 DE 3635571**

(43) Veröffentlichungstag der Anmeldung:
27.04.88 Patentblatt 88/17

(45) Bekanntmachung des Hinweises auf die
Patenterteilung:
02.01.91 Patentblatt 91/01

(84) Benannte Vertragsstaaten:
**AT CH DE GB LI NL SE**

(56) Entgegenhaltungen:
**EP-A- 0 198 133**
**DE-A- 2 713 947**
**DE-B- 1 946 457**
**PATENT ABSTRACTS OF JAPAN, Band 7, Nr.
131 (C-169)[1276], 8. Juni 1983; & JP-A-58 43
231 (BABCOCK HITACHI K.K.) 12-03-1983**

(73) Patentinhaber: **H. Krantz GmbH & Co.
Krantzstrasse 7
D-5100 Aachen (DE)**

(72) Erfinder: **Benzel, Martin, Dipl.-Ing.
Muffeter Weg 8
D-5100 Aachen (DE)**
Erfinder: **Kirsch, Ottmar, Dipl.-Ing.
Lammersdorfer Strasse 11
D-5106 Roetgen (DE)**
Erfinder: **Sodec, Franc, Dr. Ing.
Anselm-Feuerbach-Strasse 22
D-5102 Würselen-Broichweiden (DE)**

(74) Vertreter: **Bauer, Hubert, Dipl.-Ing.
Am Kellbusch 4
D-5100 Aachen (DE)**

**Beschreibung**

Die Erfindung betrifft eine Vorrichtung zur Aufnahme von rieselfähigem Schüttgut, das mittels Schwerkraft einen im wesentlichen vertikal angeordneten Schacht durchströmt. Dieser ist mit einer in seinem oberen Teil angeordneten Einfüllöffnung und einer in seinem unteren Teil angeordneten Entleerungsöffnung versehen. In gegenüberliegenden Wänden des Schachtes sind Durchtrittsöffnungen für einen den vertikalen Schüttgutstrom kreuzenden horizontalen Medienstrom und die Durchtrittsöffnungen in Abständen zur Ebene der Öffnungsquerschnitte mindestens zu einem wesentlichen Teil überdeckende Lamellen vorgesehen. Die Lamellen verlaufen zu den Wänden des Schachtes schräg und bilden mit diesen nach oben offene Taschen, wobei innerhalb des Schachtes jeweils in einem Abstand zu einer Innenseite der mit den Durchtrittsöffnungen versehenen Wände eine den Schüttgutstrom seitlich begrenzende perforierte Schürze vorgesehen ist.

Eine derartige Vorrichtung ist aus der DE-C-27 21 588 bekannt und dient zum Filtern von gasförmigen Medien durch Adsorption. Die gasförmigen Medien durchströmen die ein Wanderbett bildende Schüttung aus feinkörnigem Material, wie beispielsweise Aktivkohle. Die Gasdurchtrittsöffnungen sind entweder mit feinmaschigen Sieben oder mit schräg zum Durchtrittsquerschnitt ausgerichteten Lamellen versehen. Feinmaschige Siebe sind nur dann zu verwenden, wenn sichergestellt ist, daß sie nicht verstopfen. Dies bedeutet, daß Siebe nur dann einsetzbar sind, wenn das zu reinigende Gas staubfrei ist und auch bei der Durchströmung der feinkörnigen Schüttung keine Substanzen entstehen und vom Gasstrom mitgeführt werden, welche die Siebe verstopfen. Besteht jedoch eine Verstopfungsgefahr für die Siebe, so werden an ihrer Stelle Lamellen eingesetzt, die ein seitliches Entweichen des feinkörnigen Schüttgutes verhindern.

Die Durchströmung des Schüttguts mit dem zu reinigenden Gas führt zu einer zunehmenden Beladung des Schüttguts mit aus dem Gas ausgeschiedenen Schadstoffen. Hat die Beladung des Schüttguts mit Schadstoffen ein Maximum erreicht, wird das nachfolgende Gas nicht mehr ausreichend gereinigt. Das Schüttgut muß daher aus dem Schacht entfernt und durch neues Schüttgut ersetzt werden. Dieser Austausch kann quasi kontinuierlich erfolgen, indem über die Einfüllöffnung im oberen Teil des Schachtes frisches Schüttgut zugeführt und über die Entleerungsöffnung im unteren Teil des Schachtes mit Schadstoffen beladenes Schüttgut abgeführt wird.

Bei verschiedenen bekannten, mit Lamellen ausgestatteten Vorrichtungen hat sich jedoch gezeigt, daß in den durch die Lamellen und den seitlichen Wänden des Schachtes gebildeten Taschen ein beachtlicher Teil des Schüttguts verbleibt und somit nicht am Schüttgutaustausch teilnimmt. Diese Erscheinung erklärt sich aus einer sich seitlich gegen die Schachtwände auswirkenden Kraftkomponente, die aus dem Schüttgutstrom resultiert und auch beim Abziehen des Schüttguts im wesentlichen unverändert fortwirkt. Durch den Verbleib eines Schüttgutanteils in den Taschen entsteht insbesondere an der Rohgaseintrittsseite die Gefahr, daß sich die Taschen mit Rohgasreststaub oder bei zu reinigenden Rauchgasen mit Flugasche zusetzen.

Aus der DE-A-1 946 457 ist aber auch bereits ein Adsorptionsapparat bekannt, in dessen Schacht schürzenförmig Entlastungseinbauten angeordnet sind. Dabei ist der Abstand zwischen den Entlastungseinbauten und den jeweiligen Seitenwänden des Schachtes über die volle Schachthöhe gleichbleibend. Aufgrund dieser Anordnung ergibt sich eine Verstopfungsgefahr, welche einen freien Abfluß der Schüttgutpartikel behindert, die zwischen den Entlastungseinbauten und den Seitenwänden des Schachtes geraten.

Der Erfindung liegt die Aufgabe zugrunde, eine Vorrichtung der eingangs beschriebenen Art so zu verbessern, daß die in den durch die Lamellen und die Seitenwände des Schachtes gebildeten Taschen gelangenden Schüttgutpartikel ohne einen manuellen Eingriff und ohne eine damit verbundene Betriebsunterbrechung allein durch ihre Schwerkraft hinreichend sicher nach unten abgeführt werden können und eine Verstopfungsgefahr hinreichend sicher vermieden ist.

Zur Lösung dieser Aufgabe wird von einer Vorrichtung der im Oberbegriff des Anspruchs 1 genannten gattungsgemäßen Art ausgegangen, die erfindungsgemäß die im kennzeichnenden Teil desselben angegebenen Merkmale aufweist.

Durch die erfindungsgemäß von oben nach unten zunehmende Abstandsvergrößerung zwischen der Schürze und der Innenseite der jeweiligen Wand vergrößert sich in Abzugsrichtung der Querschnitt für den Abzug der in den Raum zwischen der Schürze und der Innenseite der jeweiligen Wand gelangten Schüttgutpartikel, so daß eine Verstopfungsgefahr hinreichend sicher vermieden ist.

Nach einer Ausgestaltung der Erfindung besteht die Schürze aus einem Lochblech und ist in einem mittleren Abstand von ca. 40 mm von der Innenseite der jeweiligen Wand angeordnet.

Durch diese Ausgestaltung verbleibt den in den Raum zwischen dem Lochblech und der Innenseite der jeweiligen Wand gelangenden Schüttgutpartikeln ein ausreichend großer Strömungsquerschnitt, über den die Schüttgutpartikel im wesentlichen parallel zum übrigen Schüttgutstrom zeitgleich unbehindert absinken können, um aus dem Schacht herausgeleitet zu werden.

Schließlich sieht eine Ausgestaltung der Erfindung noch vor, daß die Löcher im Lochblech kreisrund oder quadratisch ausgebildet sind, ihr Durchmesser bzw. ihre Seitenlänge ca. 5 mm und ihr Flächenanteil ca. 35% der gesamten Lochblechfläche beträgt.

Durch diese Ausgestaltung läßt sich einerseits gewährleisten, daß ein Lochblech mit ausreichender Blechstärke in der Lage ist, ohne Verformung den Seitendruck aus einer für derartige Filtervorrichtungen üblichen Schüttung aufzunehmen, und andererseits sicherstellen, daß dem Gasstrom durch das Lochblech nur ein vernachläßigbar geringer zusätzlicher Widerstand entgegengesetzt wird.

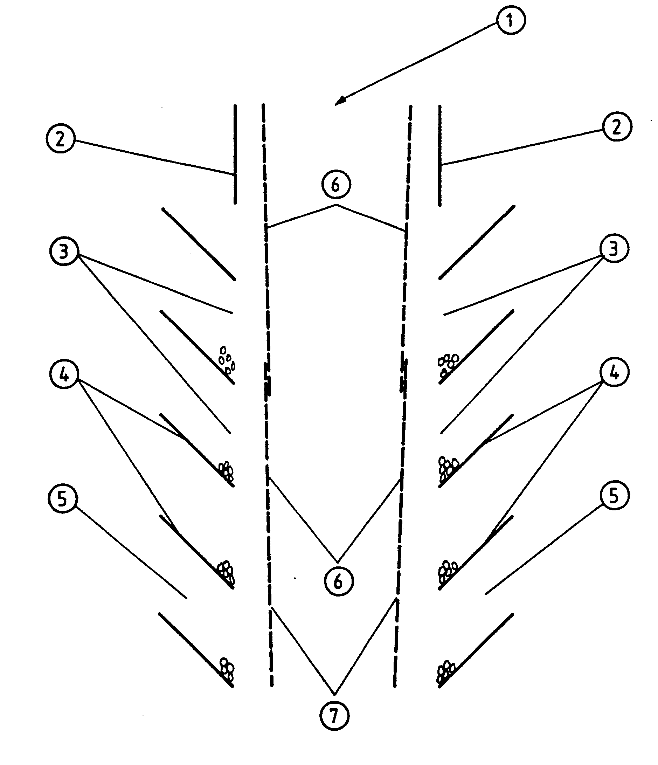

In der Zeichnung ist ein Ausführungsbeispiel einer erfindungsgemäßen Vorrichtung schematisch in einem vertikalen Schnitt dargestellt :

Ein mit seiner Längsachse vertikal angeordneter Schacht 1 zur Aufnahme eines rieselfähigen Schüttguts ist auf gegenüberliegenden Seitenwänden 2 mit Durchtrittsöffnungen 3 versehen. Lamellen 4 decken die Projektionsfläche der Durchtrittsöffnungen 3 ab und sind so schräg zu den Seitenwänden 2 angeordnet, daß nach oben offene Taschen 5 entstehen.

Innerhalb des Schachtes 1 sind in einem Abstand zu den Seitenwänden 2 Schürzen 6 angeordnet, die mit Löchern 7 versehen sind. Aus einer den Schacht 1 infolge der Schwerkraft von oben nach unten durchwandernden Schüttung gelangen auch Schüttgutpartikel in den jeweiligen Raum zwischen einer Seitenwand 2 und einer Schürze 6 und somit in die Taschen 5. Dort bleiben die Partikel unbelastet von den aus dem Schüttgutstrom resultierenden Seitendruck und können daher beim Schüttgutabzug unbehindert nach unten gleiten.

Die Schürzen 6 sind im Ausführungsbeispiel mit einem von oben nach unten konvergierenden Verlauf dargestellt, um in Abzugsrichtung den Querschnitt des Raumes zwischen der Schürze 6 und der Innenseite der jeweiligen Seitenwand 2 zu vergrößern. Diese Vergrößerung läßt sich natürlich auch dadurch erzielen, daß die Seitenwände 2 von oben nach unten divergierend verlaufen. Ebenso können zu diesem Zweck auch beide Maßnahmen gleichzeitig vorgenommen werden. Schließlich kann es auch vorteilhaft sein, sowohl die Schürzen 6 wie die Seitenwände 2 von oben nach unten divergierend anzuordnen und dabei die Divergenz der Seitenwände 2 größer zu wählen als die der Schürzen 6, so daß sich alle Abzugsquerschnitte von oben nach unten vergrößern.

## Ansprüche

1. Vorrichtung zur Aufnahme von rieselfähigem Schüttgut, das mittels Schwerkraft einen im wesentlichen vertikal angeordneten Schacht (1) mit einer in seinem oberen Teil angeordneten Einfüllöffnung und einer in seinem unteren Teil angeordneten Entleerungsöffnung durchströmt, wobei der Schacht (1) mit in gegenüberliegenden Wänden (2) angeordneten Durchtrittsöffnungen (3) für einen den vertikalen Schüttgutstrom kreuzenden horizontalen Medienstrom und mit die Durchtrittsöffnungen (3) in Abständen zur Ebene der Öffnungsquerschnitte mindestens zu einem wesentlichen Teil überdeckenden Lamellen (4) versehen ist, die zu den Wänden (2) des Schachtes (1) schräg verlaufen und mit diesen nach oben offene Taschen (5) bilden, wobei innerhalb des Schachtes (1) jeweils in einem Abstand zu einer Innenseite der mit den Durchtrittsöffnungen (3) versehenen Wände (2) eine den Schüttgutstrom seitlich begrenzende, perforierte Schürze (6) vorgesehen ist, dadurch gekennzeichnet, daß die Schürze (6) in einem von oben nach unten zunehmenden Abstand von der Innenseite der jeweiligen Wand (2) verläuft.

2. Vorrichtung nach Anspruch 1, dadurch gekennzeichnet, daß die Schürze (6) aus einem Lochblech besteht und in einem mittleren Abstand von ca. 40 mm von der Innenseite der jeweiligen Wand (2) angeordnet ist.

3. Vorrichtung nach Anspruch 1 oder 2, dadurch gekennzeichnet, daß die Löcher (7) im Lochblech kreisrund oder quadratisch ausgebildet sind, ihr Durchmesser bzw. ihre Seitenlänge ca. 5 mm und ihr Flächenanteil ca. 35% der gesamten Lochblechfläche beträgt.

## Claims

1. A device for the reception of fluid bulk material which flows by means of gravity through a substantially vertically arranged chute (1) having a feed opening arranged in its upper part and an emptying opening arranged in its lower part, in which respect the chute (1) is provided with passage apertures (3), arranged in opposite walls (2), for a horizontal flow of media intersecting the vertical flow of bulk material and with lamellae (4) which mask at least to a considerable part the passage apertures (3) at spacings from the plane of the opening's cross-sections and which extend obliquely to the walls (2) of the chute (1) and form with these upwardly open pockets (5), in which respect provided inside the chute (1) in each case at a spacing from the inside of the walls (2) provided with the passage apertures (3) is a perforated apron (6) which laterally bounds the flow of bulk material, characterised in that the apron (6) extends at a distance, increasing from above downwards, from the inside of the respective wall (2).

2. A device according to claim 1, characterised in that the apron (6) consists of a perforated sheet and is arranged at an average distance of about 40 mm from the inside of the respective wall (2).

3. A device according to claim 1 or 2, characterised in that the holes (7) in the perforated sheet are circular or square in design, their diameter or respectively their lateral length amounts to about 5 mm and their surface-area proportion amounts to about 35% of the total surface-area of the perforated sheet.

## Revendications

1. Dispositif de réception d'un produit en vrac apte à s'écouler qui passe, sous l'effet de la gravité, dans un puits (1) sensiblement vertical, ayant une ouverture de chargement à sa partie supérieure et une ouverture d'évacuation à sa partie inférieure, le puits (1) étant muni d'ouvertures de passage (3) ménagées dans des parois (2) opposées et destinées à un courant horizontal d'un milieu qui croise le courant vertical du produit en vrac, et de lamelles (4) recouvrant, au moins pour une grande partie, les ouvertures de passage (3) à distance du plan des sections transversales des ouvertures, ces lamelles étant inclinées par rapport aux parois (2) du puits (1) et formant avec celles-ci des poches (5) ouvertes vers le haut, une jupe (6) perforée et délimitant latéralement le courant de produit en vrac étant prévue dans le puits (1) à distance d'un côté intérieur des parois (2) munies des ouvertures de passage (3), caractérisé en ce que la jupe (6) s'étend à une distance croissante, de haut en bas, par rapport au côté intérieur de la paroi (2).

2. Dispositif suivant la revendication 1, caractérisé en ce que la jupe (6) est constituée d'une tôle perforée et est disposée à une distance moyenne de 40 mm environ du côté intérieur de la paroi (2).

3. Dispositif suivant la revendication 1 ou 2, caractérisé en ce que les trous (7) de la tôle perforée sont circulaires ou carrés, leur diamètre ou leur côté est de 5 mm environ et leur surface représente 35% environ de toute la surface de la tôle perforée.